# EUROPEAN PATENT SPECIFICATION

(11) **EP 2 930 538 B1**
(45) Date of publication and mention of the grant of the patent: **04.04.2018**
(21) Application number: 13859779.4
(22) Date of filing: 04.12.2013
(51) Int. Cl.: G01T 1/203, G01T 1/167, G01T 7/02

(54) **PLASTIC SCINTILLATOR, SAMPLE FOR SCINTILLATION MEASUREMENT, METHOD FOR MANUFACTURING PLASTIC SCINTILLATOR, AND SCINTILLATION DETECTOR**
KUNSTSTOFFSZINTILLATOR, PROBE ZUR SZINTILLATIONSMESSUNG, VERFAHREN ZUR HERSTELLUNG VON KUNSTSTOFFSZINTILLATOR UND SZINTILLATIONSDETEKTOR
SCINTILLATEUR EN PLASTIQUE, ÉCHANTILLON POUR MESURE DE SCINTILLATION, PROCÉDÉ DE FABRICATION D'UN SCINTILLATEUR EN PLASTIQUE ET DÉTECTEUR À SCINTILLATION

(30) Priority: 04.12.2012 JP 2012265737
(43) Date of publication of application: 14.10.2015
(73) Proprietor: Ochanomizu University, Bunkyo-ku Tokyo 112-8610 (JP)
(72) Inventor: FURUTA, Etsuko, Tokyo 112-8610 (JP)
(74) Representative: Beck Greener
(86) International application number: PCT/JP2013/082642
(87) International publication number: WO 2014/088046

(56) References cited:
- EP-A1- 0 127 866
- JP-A- S59 218 977
- JP-A- 2007 080 688
- JP-A- 2007 080 688
- US-A- 3 898 463
- US-A- 4 916 321
- UDA T ET AL: "Detection efficiency of plastic scintillator for gaseous tritium sampling and measurement system", FUSION ENGINEERING AND DESIGN, ELSEVIER SCIENCE PUBLISHERS, AMSTERDAM, NL, vol. 85, no. 7-9, 1 December 2010 (2010-12-01), pages 1474-1478, XP027525422, ISSN: 0920-3796 [retrieved on 2010-05-01]
- Etsuko Furuta ET AL: "Tritiated water measurement with high measurement efficiency by plastic scintillator", Annual report of national institute for fusion science, 1 November 2012 (2012-11-01), page 336, XP55296466, Retrieved from the Internet: URL:http://www.nifs.ac.jp/report/annrep12/ pdf/336.pdf [retrieved on 2016-08-19]

## Description

### TECHNICAL FIELD

The present invention relates to a plastic scintillator for use in a scintillation detector.

### BACKGROUND ART

In measurement of radiation using a scintillation detector, it has been generally known in the prior art to employ a liquid scintillator. However, since radioactive liquid organic waste fluid is generated if a liquid scintillator is used, accordingly dealing with this liquid organic waste fluid constitutes a severe burden. Due to this, trials have been performed for making measurements using a plastic scintillator as a scintillation detector (for example, refer to Non-Patent Document #1).

### CITATION LIST

### NON-PATENT LITERATURE

Non-Patent Document #1: A. Tarancon, J.F. Garcia, G. Rauret, "Mixed waste reduction in radioactivity determination by using plastic scintillators", Analytica Chimica Acta, Spain, Elsevier, 463 (2002), pp. 125-134.

EP127866 discloses a method of detecting a radioactive substance utilising a stimulable phosphor.

Furuta, E. et al., "Tritiated Water Measurement by High Measurement Efficiency by Plastic Scintillator", Annual Report of National Institute for Fusion Science, 1 November 2012, p. 336, describes concentration measurement of tritium in tritiated water using a plastic scintillator.

### SUMMARY OF INVENTION

### TECHNICAL PROBLEM

However some improvement in this procedure is required, since measurement of a liquid sample with a plastic scintillator takes a long time and the efficiency is poor.

Accordingly, the object of the present invention is to provide a plastic scintillator capable of efficiently measuring a sample.

### SOLUTION TO TECHNICAL PROBLEM

The plastic scintillator of the present invention is a plastic scintillator containing fluorescent substance wherein the plastic scintillator is used in a scintillation detector which measures fluorescence emitted from the fluorescent substance due to radiation and comprises a measurement surface that has been reformed by irradiation with plasma in order to enhance hydrophilic properties thereof.

According to the plastic scintillator of the present invention, by performing surface treatment of the measurement surface and thus enhancing its hydrophilic properties, it becomes possible to perform measurement at high efficiency, since, when a droplet of the sample falls upon the measurement surface, it spreads out thereupon over a wider range than in the prior art.

According to the plastic scintillator of the present invention, the measurement surface is reformed by irradiation with plasma. According to this, when a droplet of the sample falls upon the measurement surface upon which plasma treatment has been performed, the sample spreads out upon this measurement surface over a wider range than in the prior art, so that it becomes possible to perform measurement at high efficiency. It is surmised that this is because the fact that the hydrophilic properties of the measurement surface have been enhanced by the plasma treatment makes a contribution to enhancement of the efficiency.

And, according to another aspect of the plastic scintillator of the present invention, two plastic scintillators are made into one set in order to sandwich a liquid sample that is to be a subject for measurement by the scintillation detector between their respective measurement surfaces. According to this, the contact surface area for the liquid sample is increased, since the liquid sample is sandwiched between the two plastic scintillators.

The sample body for scintillation measurement described herein is a sample body for scintillation measurement for use in a scintillation detector in which a liquid sample that includes a radioactive substance is taken as a subject for measurement, configured to include at least one plastic scintillator as described above, wherein a liquid film is formed with the subject for measurement over the measurement surface.

According to the sample body for scintillation measurement, because surface treatment is performed upon the measurement surface in order to enhance the hydrophilic properties thereof, accordingly, when a droplet of the sample falls upon that measurement surface, it spreads out thereupon over a wider range than in the prior art, and therefore it becomes possible to perform measurement at high efficiency.

Suitably in the sample body for scintillation measurement described herein, two plastic scintillators having the measurement surfaces respectively are superimposed, so that the subject of measurement is sandwiched between their respective measurement surfaces. According to this, the contact surface area for the liquid sample is increased, since the liquid sample is sandwiched between the two plastic scintillators, so that it is possible to enhance the counting efficiency.

Preferably, the subject for measurement is tritiated water. According to this, since surface treatment is performed upon the measurement surface in order to enhance the hydrophilic properties thereof, therefore it becomes possible to perform measurement with a plastic scintillator, even in the case of a liquid such as tritiated water.

The method for manufacturing a plastic scintillator as described herein is a method for manufacturing a plastic scintillator for use in a scintillation detector, comprising a plasma treatment process of irradiating plasma against a measurement surface of the plastic scintillator, and thereby reforming this surface.

According to the method for manufacturing a plastic scintillator, the measurement surface of the plastic scintillator is reformed by irradiating plasma against it. When this is done, the sample spreads out upon the measurement surface over a higher range than in the prior art, so that it becomes possible to perform measurement at high efficiency. Although a plasma irradiation device is required for irradiating this plasma, such a device can be manufactured comparatively easily.

As one aspect of the method for manufacturing a plastic scintillator, the method further comprises a shaking process of reciprocatingly shaking the plastic scintillator to and fro at a constant speed in a direction parallel to the measurement surface; and wherein, in the plasma treatment process, the plasma is irradiated against the measurement surface which is shaken to and fro. Since, according to the above, during irradiation of the plasma, the plastic scintillator is shaken reciprocatingly to and fro at a constant speed in a direction parallel to its measurement surface, therefore it is possible to increase the range upon the plastic scintillator over which plasma is irradiated.

The scintillation detector of the present invention is a scintillation detector, comprising: a sample body installation section in which is installed a sample body for scintillation measurement that has been manufactured by allowing a droplet of a liquid sample to fall upon a measurement surface of the plastic scintillator described above; a photomultiplier tube configured to measure the sample body for scintillation measurement installed in the sample body installation section; and a shielding body configured to shield the sample body installation section and the photomultiplier tube; wherein an insertion slot for inserting and mounting the sample body for scintillation measurement is provided in the sample body installation section.

According to the scintillation detector of the present invention, it becomes possible to make the scintillation detector more compact by providing this simple structure in which the sample body installation section and the photomultiplier tube are covered over with the shielding body. And, since the insertion slot of the sample body installation section is provided in the shielding body, accordingly it is possible to install the sample body in the scintillation detector in a simple and easy manner.

As one aspect of the scintillation detector of the present invention, an adapter that can be attached to the sample body for scintillation measurement is provided to the sample body installation section, the adapter being mounted in the sample body installation section via the insertion slot. According to the above, it is possible to mount the sample body for scintillation measurement simply and easily into the sample body installation section by attaching the adapter to it. Moreover, in this aspect, a holding device configured to hold the adapter, a detection device configured to detect that the adapter has been held by the holding device, and an opening/closing device configured to be positioned between the sample body for scintillation measurement installed in the sample body installation section and the photomultiplier tube, are provided to the sample body installation section; and the scintillation detector further comprises an operation control device configured to control the opening/closing operation of the opening/closing device on the basis of the result of detection by the detection device. According to this, it is possible to prevent any influence due to light from the exterior being exerted upon the photomultiplier tube.

And, as another aspect of the scintillation detector of the present invention, a drying device is provided to the sample body installation section for drying an internal space thereof in which the sample body for scintillation measurement is installed. According to this, it is possible to enhance the counting efficiency, since the sample body for scintillation measurement is dried in the interior of the sample body installation section.

### ADVANTAGEOUS EFFECTS OF INVENTION

As has been explained above, according to the present invention, when a droplet of the sample is let fall upon the measurement surface that has been subjected to plasma treatment, the sample spreads out over a wider range upon this measurement surface than in the prior art, and accordingly it becomes possible to perform measurement at high efficiency.

### BRIEF DESCRIPTION OF DRAWINGS

Fig. 1 is a conceptual figure for explanation of measurement of a sample with a liquid scintillation detector that employs a plastic scintillator according to an embodiment of the present invention;
Fig. 2 is a schematic figure showing a plasma irradiation device that performs plasma treatment upon an unprocessed PS;
Fig. 3 is a photographic image showing how plasma is irradiated upon the unprocessed PS;
Fig. 4A is an image of the measurement surface of a PS that has been irradiated with plasma for one minute, taken with a scanning probe microscope;
Fig. 4B is another image of the measurement surface of this PS that has been irradiated with plasma for one minute, also taken with a scanning probe microscope;
Fig. 5A is an image of the measurement surface of an unprocessed PS, taken with a scanning probe microscope;
Fig. 5B is another image of the measurement surface of this unprocessed PS, also taken with a scanning probe microscope;
Fig. 6 is an image for comparison of the effects of presence of plasma irradiation and absence thereof, when a droplet of a sample has been let fall upon a plastic scintillator;
Fig. 7A is a schematic figure for explanation of a PS upon which a droplet of the sample has fallen;
Fig. 7B is a schematic figure for explanation of an unprocessed PS upon which a droplet of the sample has been let fall;
Fig. 8 is a schematic figure for explanation of a double PS;
Fig. 9 is a graph showing the counting efficiency when measuring a sample using various PSs for which the time period for plasma irradiation was varied;
Fig. 10 is a graph showing the relationship between the counting rate and radioactivity, when measurement is performed using a PS as a scintillation detector;
Fig. 11 is a graph showing the spectra of various principal beta-ray emitting radionuclides, as measured using a PS;
Fig. 12 is a schematic figure showing a scintillation detector according to an embodiment of the present invention;
Fig. 13 is a perspective view showing principal portions of a sample body installation section;
Fig. 14 is a sectional view of the sample body installation section;
Fig. 15 is a functional block diagram showing the structure of a control system of this scintillation detector;
Fig. 16 is a flow chart showing processing for performing measurement, executed by each of control units and a data processing unit of a PC;
Fig. 17 is a figure for explanation of, in a first process, irradiating plasma against an unprocessed PS that is being shaken to and fro;
Fig. 18 is a graph showing binding energy distributions of measurement surfaces of PSs of a plurality of types which have been manufactured while varying the type of gas used for plasma irradiation;
Fig. 19 is an image showing a double PS, and, as a comparison example, a double unprocessed PS in which a sample is sandwiched between two unprocessed PSs 2;
Fig. 20 consists of graphs showing the counting efficiencies of various plastic scintillators compared, with drying agent both present and absent;
Fig. 21 is a perspective view of a glass vial into which silica gel beads have been charged; and
Fig. 22 is a conceptual figure showing principal portions of a scintillation detector according to a variant embodiment.

### DESCRIPTION OF EMBODIMENTS

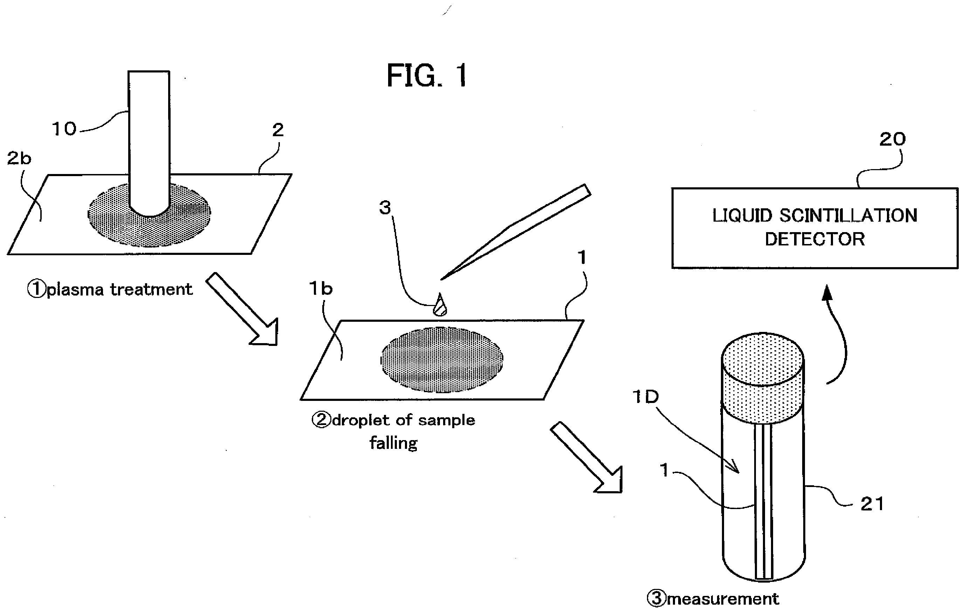

Fig. 1 is a conceptual figure for explanation of measurement of a sample 3 with a liquid scintillation detector 20 employing a plastic scintillator 1 according to an embodiment of the present invention. The plastic scintillator (hereinafter abbreviated as "PS") 1 has a sheet shaped, film shaped, or plate shaped main body 1a. The thickness and the shape of the PS 1 may be varied as appropriate, depending upon the nature of the sample 3. A measurement surface 1b upon which a droplet of the sample is dropped is provided upon the surface of the main body 1a. The main body 1a of the PS 1 is made from a per se known composition in which a fluorescent substance is mixed into a plastic such as polystyrene or the like that is capable of absorbing radionuclides. As one example, a plastic scintillator BC-400 (0.5 mm thickness) made by Saint-Gobain Co. Ltd. may be used in the form of a sheet 45 mm x 14 mm.

First, as a first procedure, using a plasma irradiation device 10, plasma is irradiated onto the measurement surface 2b of a plastic scintillator 2 upon which plasma treatment has not yet been performed (hereinafter abbreviated as an "unprocessed PS"). And thereby the measurement surface 2b upon which plasma has been irradiated is reformed (hereinafter the unprocessed PS 2 upon which plasma has been irradiated will be termed the "plastic scintillator 1"). It should be understood that the details will be described hereinafter.

Then, as a second procedure, a droplet of the sample 3 is let fall upon the measurement surface 1b of the PS 1. Plasma has been irradiated upon the measurement surface 1b, so that its surface has been reformed. As a result, it has been confirmed that the sample 3 spreads out upon the measurement surface 1b over a wider range than in the prior art. Here, this sample 3 upon which the droplet has fallen is a liquid sample. It should be understood that the details will be described hereinafter.

Next, as a third procedure, the PS 1 upon which a droplet of the sample 3 has fallen is set into a glass vial 21, is installed into a liquid scintillation detector 20, and the radiation is measured. In the same manner as in the case of a liquid scintillator that is used with a prior art liquid scintillation detector 20, the PS 1 may be set into the glass vial 21 and the fluorescence generated by radiation may be detected. A per se known type of liquid scintillation detector 20 may be employed. It should be understood that, in Fig. 1, a case is shown in which a double PS 1D that will be described hereinafter is set into the glass vial 21.

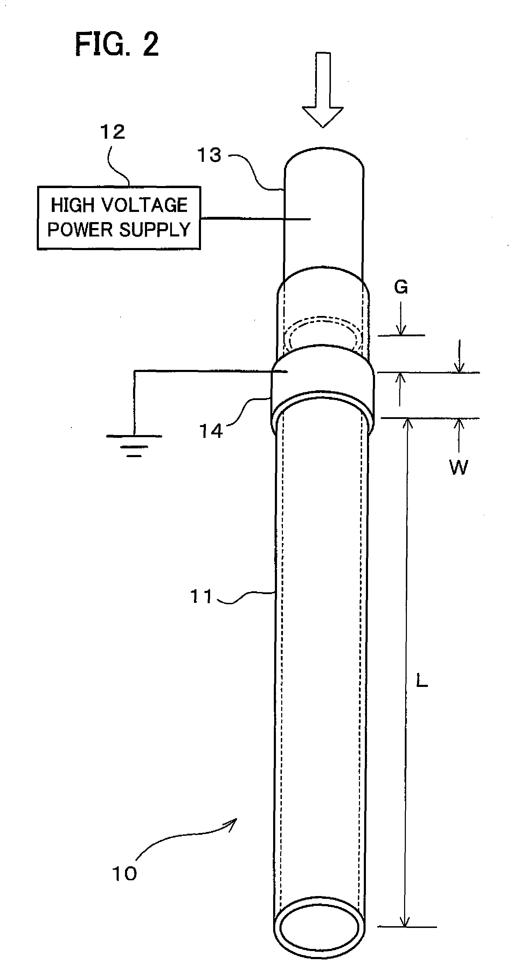

Fig. 2 is a schematic figure showing the plasma irradiation device 10 that performs plasma treatment upon the unprocessed PS 2. For example, an impulse type high frequency device may be used as the plasma irradiation device 10. This plasma irradiation device 10 comprises a quartz glass tube 11 for irradiating the plasma, a ring electrode 13 to which voltage is applied from a high voltage power supply 12, and another ring electrode 14 that is grounded. As one example, the gap G between the ring electrodes 13 and 14 may be 1 mm, the length L of the quartz glass tube 11 that extends from the ring electrode 14 may be 60 mm, and the width W of the ring electrode 14 may be 10 mm. Argon gas is supplied from the opening of the ring electrode 13, and plasma generated by the applied voltage is irradiated from the aperture of the quartz glass tube 11.

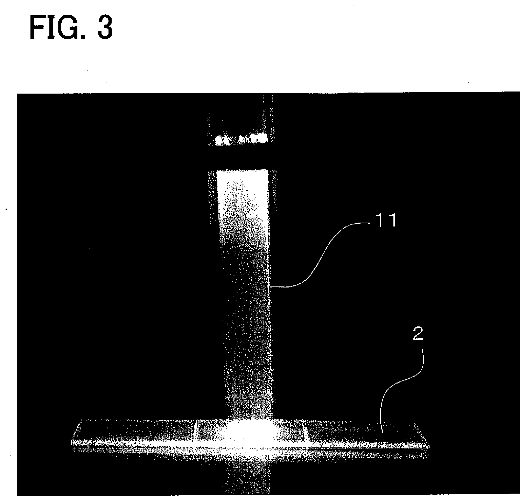

Fig. 3 is a photographic image showing how plasma is irradiated upon the unprocessed PS 2. This Fig. 3 is an image corresponding to the first procedure described above. Settings for the operation of this impulse type high frequency device at this time are: a voltage of 10 kV outputted from the high voltage power supply 12; a high frequency of 10 kHz; and a flow rate of argon gas supply of 4 L/min. Moreover, the gap between the aperture of the quartz glass tube 11 and the measurement surface 2b of the unprocessed PS 2 is 5 mm. The PS 1 can be manufactured by performing plasma irradiation against the unprocessed PS 2 in this manner. It should be understood that, as the type of plasma that can be used, other than the DBD plasma that is generated using a dielectric barrier discharge as shown in Fig. 1 and Fig. 2, it would also be acceptable to utilize plasmas of various types that are generated by per se known methods, such as an inverter plasma that is generated in a vacuum using an inverter power supply, or a multi-gas plasma that is generated at atmospheric pressure, or the like. Any per se known plasma may be used.

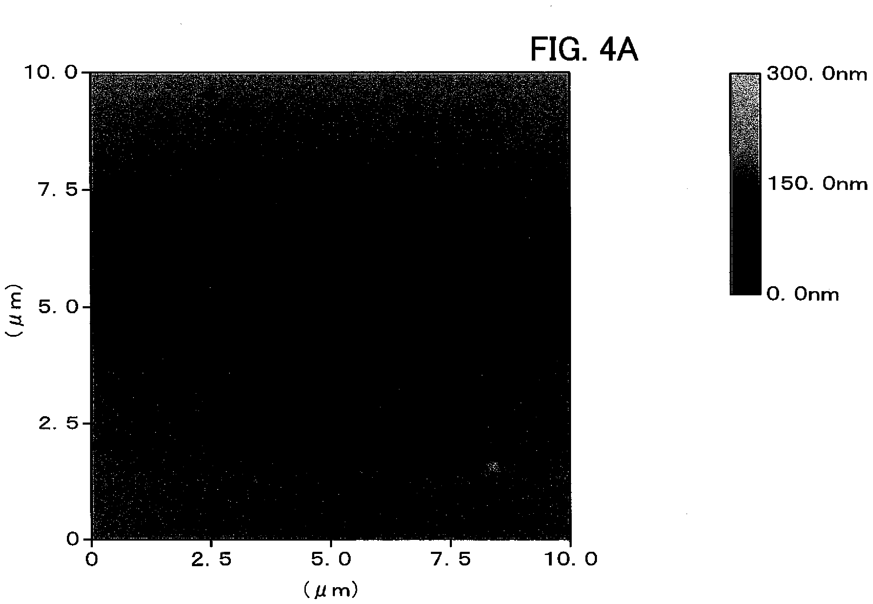

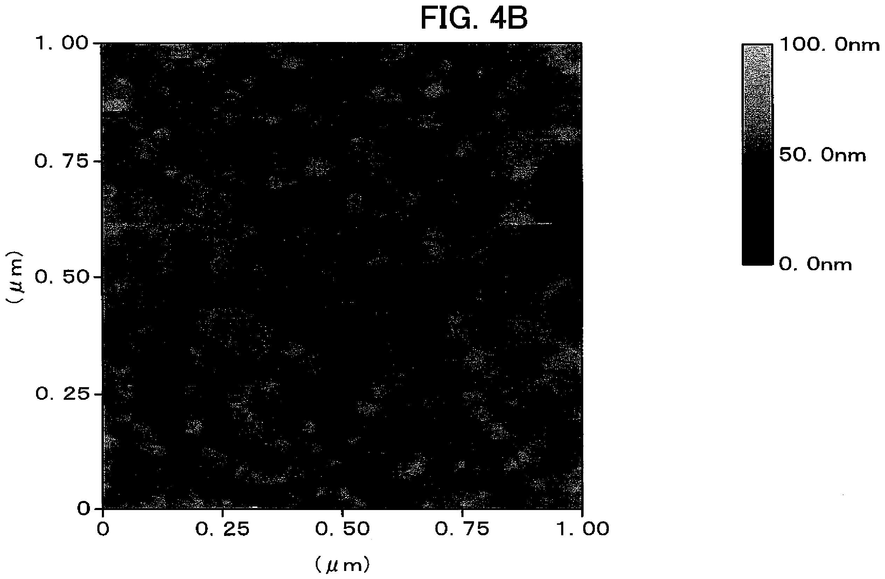

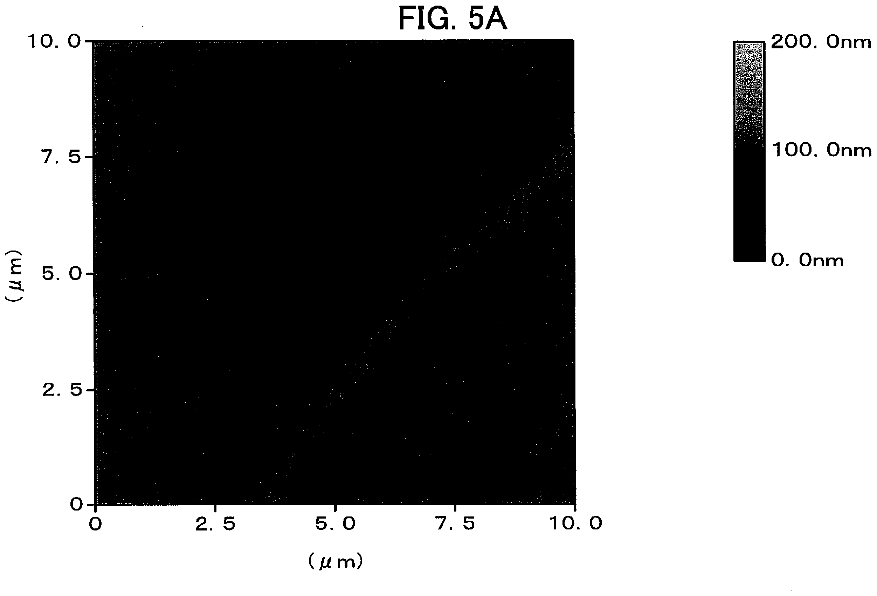

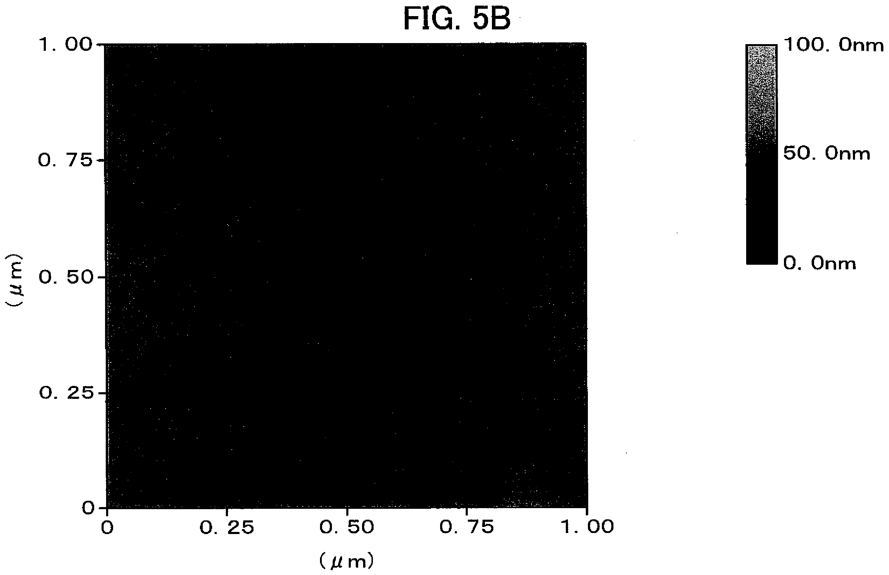

Fig. 4A and Fig. 4B are images of the measurement surface 1b of a PS 1A taken with a scanning probe microscope. Fig. 4A is an image of the measurement surface 1b of the PS 1A over a range of 10 µm X 10 µm, while Fig. 4B is an image of the measurement surface 1b of the PS 1A over a range of 1 µm X 1 µm. Moreover, as a comparison, Fig. 5A and Fig. 5B are images of the measurement surface 1b of an unprocessed PS taken with a scanning probe microscope in a similar manner. Fig. 5A is an image of the measurement surface 1b of the unprocessed PS 2 over a range of 10 µm X 10 µm, while Fig. 5B is an image of the measurement surface 1b of the unprocessed PS 2 over a range of 1 µm X 1 µm. While comparison of Fig. 4A and Fig. 5A in which images over the range of 10 µm X 10 µm are displayed does not reveal any outstanding differences, when Fig. 4B and Fig. 5B in which images over the range of 1 µm X 1 µm are displayed are compared together, it can be verified that roughnesses have been created upon the measurement surface 1b of the PS 1A. As a result of the reformation by plasma irradiation, minute roughnesses have been formed, having differences of elevation of 100 nm or less.

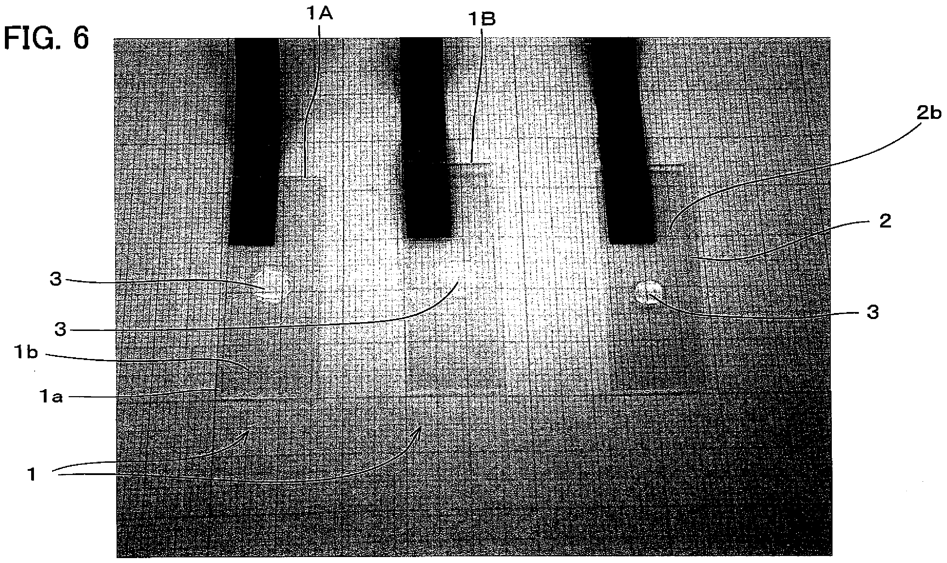

Fig. 6 is an image for comparison of the effects of presence and absence of plasma irradiation when a droplet of the sample 3 has been dropped upon the measurement surface 1b. Fig. 6 is an image corresponding to the second process described above. A PS 1A that was put into the plasma irradiation device 10 described above and was irradiated with plasma for one minute, a PS 1B that was irradiated with plasma in a similar manner for three minutes, and an unprocessed PS 2 are shown in Fig. 6. Moreover, droplets of a sample 3 were let fall upon the measurement surfaces of the PSs 1A, 1B, and 2 and were present there, each consisting of 20 µL of tritiated water (chemically expressed as HTO or H³HO). It can be confirmed that the droplet of the sample 3 which had fallen onto the unprocessed PS 2 bulged upward due to hydrophobicity of the plastic. On the other hand, with the PS 1A and the PS 1B that were irradiated with plasma, the surface tension was reduced, so that the area of the surface of contact with the sample 3 was increased. Both with the PS 1A which had been irradiated with plasma for one minute and with the PS 1B, the contact surface area was increased to approximately the same extent, so that it was understood that an adequate reforming operation had been obtained. Thus it is possible to enhance the counting efficiency, since, if the contact surface area becomes large, a great deal of the radiation energy of the sample 3 is delivered to the PS 1.

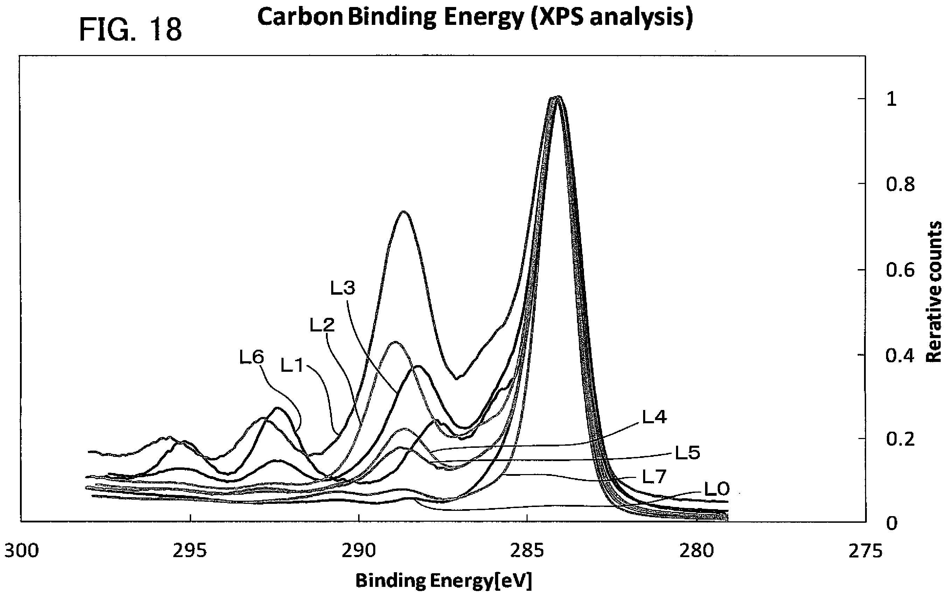

Fig. 18 is a graph showing binding energy distributions of measurement surfaces 1b of PSs 1 of a plurality of types which have been manufactured while varying the type of gas used for plasma irradiation. In this graph, the horizontal axis is the binding energy in eV as obtained by utilizing XPS analysis, while the vertical axis is the relative counts. When manufacturing each of the PSs 1 that were used for analysis, the gas that was used for plasma irradiation was different, and, in the graph of Fig. 18: the line L1 shows the results for a PS 1 for which oxygen was used; the line L2 shows the results for a PS 1 for which a gas consisting of a mixture of carbon dioxide and oxygen was used; the line L3 shows the results for a PS 1 for which nitrogen was used; the line L4 shows the results for a PS 1 for which air was used; the line L5 shows the results for a PS 1 for which carbon dioxide was used; the line L6 shows the results for a PS 1 for which a gas consisting of a mixture of argon and oxygen was used; the line L7 shows the results for a PS 1 for which argon was used; and, as a comparison example, the line L0 shows the results for an unprocessed PS 2. Since, with respect to the unprocessed PS 2 (i.e. the line L0), the results were that, for all of the PSs 1 upon which plasma treatment had been performed (i.e. for all the lines L1 through L7), the relative counts increased in the vicinity of a binding energy of 289 eV, accordingly it will be understood that the proportion of C=O bond was increased, i.e. that hydrophilic groups were added. Therefore it may be said that hydrophilic properties were imparted to the measurement surfaces 1b by performing plasma irradiation, since the roughness and the contact surface area of the samples 3 shown in Fig. 4B were increased and hydrophilic groups were added.

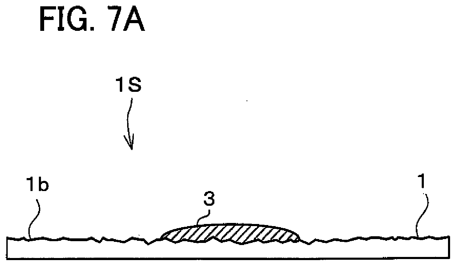

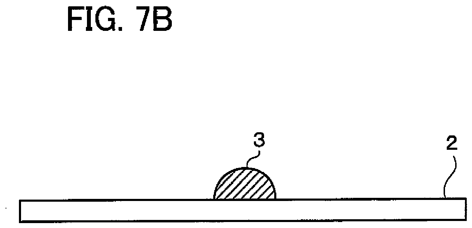

Fig. 7A and Fig. 7B are schematic figures for explanation of a PS 1 and an unprocessed PS 2 upon which droplets of the sample 3 have fallen. As shown in Fig. 7A, roughnesses have been created upon the measurement surface 1b of the PS 1 by the plasma treatment, and it is surmised that hydrophilic properties have thereby been imparted to this surface. Due to this, the contact surface area between the sample 3 and the PS 1 is increased. On the other hand, as shown in Fig. 7B, with the measurement surface of the unprocessed PS 2, due to the hydrophobicity of plastic, the sample 3 is repelled and bulges upward. It should be understood that while, due to the plasma treatment, the contact area of the sample 3 widens out over the measurement surface 1b of the PS 1, it has been verified that the magnitude of this widening out varies depending upon the density of the sample 3 and so on. However, as compared with an unprocessed PS 2, the contact surface area of the PS 1 that has been plasma treated is substantially widened out.

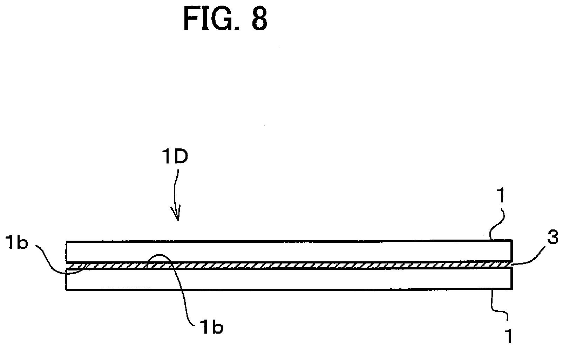

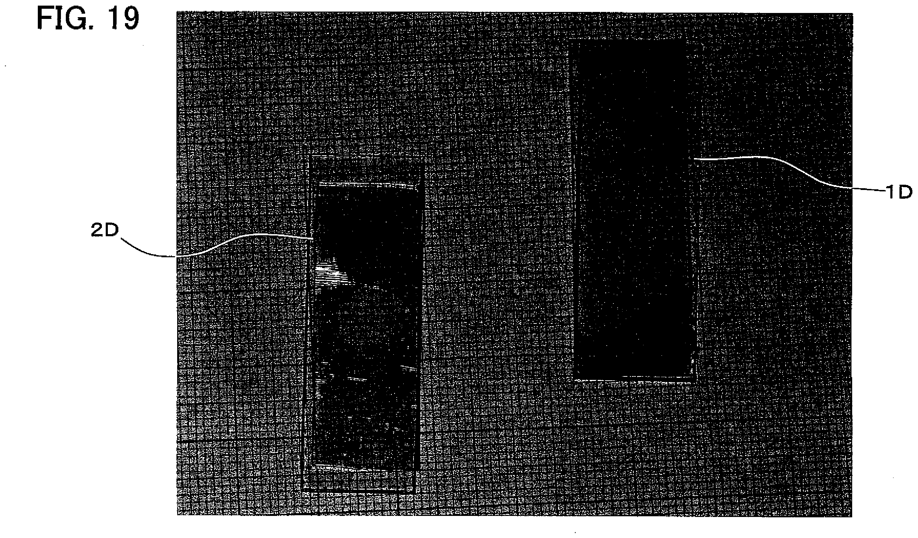

Next, the details of measurement by the liquid scintillation detector 20 in the third process described above will be explained. A PS 1 upon which a droplet of the sample 3 has been allowed to fall is set into the glass vial 21, and is measured by the liquid scintillation detector 20. As the method for setting this PS 1 into the glass vial 21, there are two possible methods: as shown in Fig. 7A, a single sheet of PS 1 upon which a droplet of the sample 3 has fallen (sometimes this will be termed the "single PS 1S") may be employed; or, as shown in Fig. 8, a double PS 1D may be employed, in which the sample 3 is sandwiched between the measurement surfaces 1b of two PSs 1. When a double PS 1D is employed, since the sample 3 is sandwiched between the two PSs 1, accordingly the contact surface area with the double PS 1D is increased, as compared to the case of a single PS 1S. In particular, with the double PS 1D, it has been verified that the sample 3 is spread out thinly, since it is sandwiched between the two measurement surfaces 1b that have both been subjected to plasma treatment. Incidentally, when the sample 3 is sandwiched between two unprocessed PSs 2, the contours of the sample 3 due to the hydrophobicity of the plastic have been verified by visual inspection. Fig. 19 is an image showing a double PS 1D, and, as a comparison example, a double unprocessed PS 2D in which a sample 3 is sandwiched between two unprocessed PSs 2.

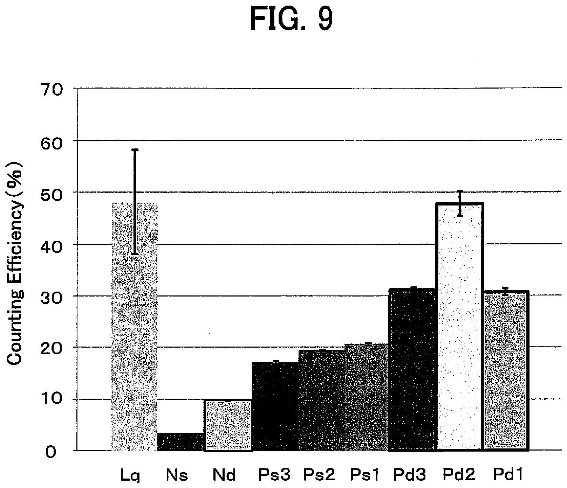

Fig. 9 is a graph showing the counting efficiency when measuring a sample 3 using PSs 1 for which the time period for plasma irradiation has been varied. In the graph of Fig. 9 there are shown, in order from the left side of the drawing, data Lq measured with a liquid scintillator, data Ns measured for a single unprocessed PS 2, data Nd measured with a double unprocessed PS 2, data Ps3 measured with a single PS 1S upon which plasma treatment was performed for three minutes, data Ps2 measured with a single PS 1S upon which plasma treatment was performed for two minutes, data Ps1 measured with a single PS 1S upon which plasma treatment was performed for one minute, data Pd3 measured with a double PS 1D upon both sides of which plasma treatment was performed for three minutes, data Pd2 measured with a double PS 1D upon both sides of which plasma treatment was performed for two minutes, and data Pd1 measured with a double PS 1D upon both sides of which plasma treatment was performed for one minute.

While it is seen that, as compared to the data Lq when a liquid scintillator was used, the data Ns and Nd when unprocessed PSs 2 were used both exhibited low counting efficiency and could not be used in practice, on the other hand, when measurement was performed with a PS 1 upon which plasma treatment had been performed, the counting efficiency was enhanced by at least 10% or more. In particular it will be understood that, when measurement was performed using a double PS 1D, an efficiency could be obtained equal to that when performing measurement with a liquid scintillator. And it was confirmed that the counting efficiency was improved by irradiating the unprocessed PS 2 with plasma for one minute or more.

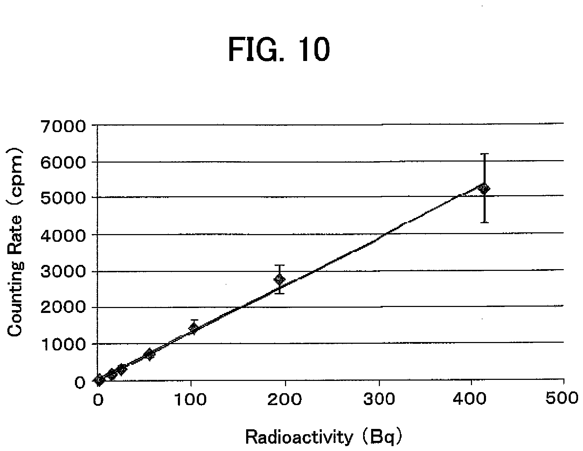

Fig. 10 is a graph showing the relationship between the counting rate (in counts per minute) and radioactivity (in Bq), when measurement is performed using a PS 1 as a scintillation detector. These are results when measurement was repeated with various samples of various different densities (in Fig. 10, seven different densities) three times each. The amount of radioactivity was constant with respect to the counting rate. In other words it is seen that, with measurement using the PS 1 of the present invention, quantitatively is assured.

In the prior art, with a liquid scintillation detector, since a sample consisting of a compound labeled with a beta-ray emitting nuclide was dissolved within the liquid scintillator, accordingly, the phenomenon occurred that the molten sample itself intercepted some of the fluorescence emitted due to the radiation, which was undesirable. Due to this, the fluorescence decay (i.e. quenching) took place. And since the level of this quenching was different for each sample, the problem occurred that it was not possible to identify the type of radionuclide that was dissolved in the liquid scintillator, even by measuring the spectrum. Although the radionuclide used could be identified by employing research, so that there was no immediate problem, this cannot be considered as being an adequate countermeasure, since in the case of a contamination inspection or the like it may not be clear what radionuclide is the cause of contamination.

However, with the embodiment described above, tritiated water (chemically expressed as HTO or H³HO) which is a beta-ray emitting nuclide is employed as the sample 3, and, while tritiated water is a substance that must be produced for development of nuclear fusion which is anticipated to be the next-generation energy, tritium is a radionuclide which is dangerous if it leaks out into the environment. Due to this, while procedures involving tritiated water are becoming very important for the future, at the present stage, tritiated water is measured with a liquid scintillation detector using a liquid scintillator after having repeatedly concentrated sample. If the number of measurements is increased, then there is a fear that a large amount of liquid organic waste fluid will be produced, and that disposing of it will become a burden. Moreover the liquid scintillator is itself a harmful substance, since it is a mixture of an organic solvent that is carcinogenic, a surfactant that constitutes a burden upon the environment, and a wavelength conversion agent that is quite toxic.

Accordingly, it is desirable to develop a method that can measure tritiated water-at high efficiency without generating any liquid organic waste fluid. In particular, the energy of the beta-ray of tritium is the lowest for currently known beta-ray, and its maximum value is 18.6 keV while its average value is 5 keV, so that, if tritiated water is present, the beta-ray therefrom is undesirably absorbed by the "water" itself, so that there is also the problem that fluorescence is only generated by portions that are in direct mutual contact. On the other hand, while research is progressing in relation to methods for measurement with a plastic scintillator with which almost no radioactive liquid organic waste fluid is created, there are the problems that it may not be possible to perform measurement due to the property of plastic, and that, even if such measurement can be performed, it takes a long time so that the efficiency is bad, and accordingly the burden upon the person performing the measurement is considerable.

Since, when a droplet of the sample 3 is let fall upon the measurement surface 1b of the PS 1 of the present invention, the sample 3 spreads out over the measurement surface 1b over a greater range than in the prior art, accordingly the amount of fluorescence that is generated due to reception of radiation from the sample 3 becomes greater, so that the counting efficiency is improved.

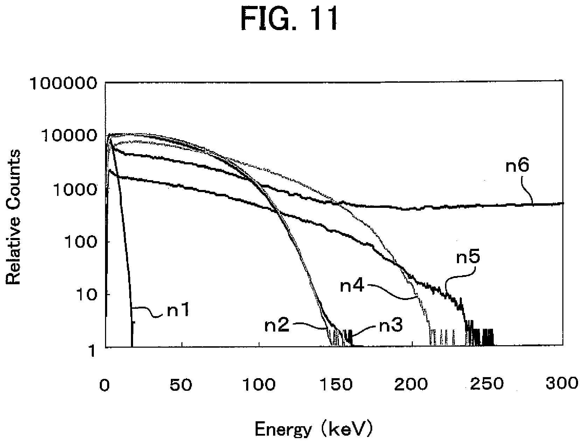

With the present invention, the quenching problem described above is solved by the use of a PS 1. Fig. 11 is a graph showing the spectra of various principal beta-ray emitting radionuclides, as measured using PSs 1. In this graph of Fig. 11, as beta-ray emitting radionuclides, tritium (³H, maximum energy 18.6 keV) is shown as n1, carbon 14 (¹⁴C, maximum energy 156 keV) is shown as n2, sulfur 35 (³⁵S, maximum energy 167 keV) is shown as n3, phosphorus 33 (³³P, maximum energy 249 keV) is shown as n4, calcium 45 (⁴⁵Ca, maximum energy 257 keV) is shown as n5, and phosphorus 32 (³²P, maximum energy 1711 keV) is shown as n6.

With measurement using a prior art liquid scintillator, although all the spectra described above are shifted toward the left side of the graph due to quenching, it has been difficult to identify them, because the proportional shifting is different for each sample. However with the present invention, as shown in Fig. 11, identification of the radionuclide becomes possible. In particular, while it was impossible to identify n2 (for carbon 14) and n3 (sulfur 35) which are often employed, this is shown now to be possible. Thus, by using a PS 1 according to the present invention in this manner, it is possible to distinguish beta-ray emitting radionuclides whose maximum energies are close together, which up until now has been impossible.

With the present invention, it is possible to measure the sample with a simple method that does not employ a liquid scintillator. Since with a plastic scintillator no radioactive liquid organic waste fluid is generated, and also there is no requirement to wash any vial to which liquid organic waste fluid has adhered as is the case with use of a liquid scintillator, accordingly the burden upon the operator is alleviated. Moreover, there is no danger of harm to the human body, and the load upon the environment is lighter.

With the present invention described above, it would be possible to implement various changes. For example while, in the above embodiment, the sample 3 was explained as being tritiated water, this is not limitative. For example, it would also be possible to measure ³H, ¹⁴C, ³⁵S or the like, if these are radionuclides with which some other radioactive compound has been labeled. Moreover, the scintillation detector is not limited to being a liquid scintillation detector 20. While the plastic scintillator 1 of the present invention can be used with a liquid scintillation detector 20 which is a very widespread device for measuring a liquid scintillator, it would also be possible to use various other types of scintillation detector. Moreover, if the PS 1 is manufactured by irradiating plasma against the measurement surface 2b of an unprocessed PS 2, then it may be arranged to irradiate the plasma against the entire area of the measurement surface 2b, or alternatively it may be arranged to irradiate the plasma against only one portion thereof. Even further, the conditions when letting fall the droplet of the sample 3, and the conditions during measurement, may be varied as appropriate.

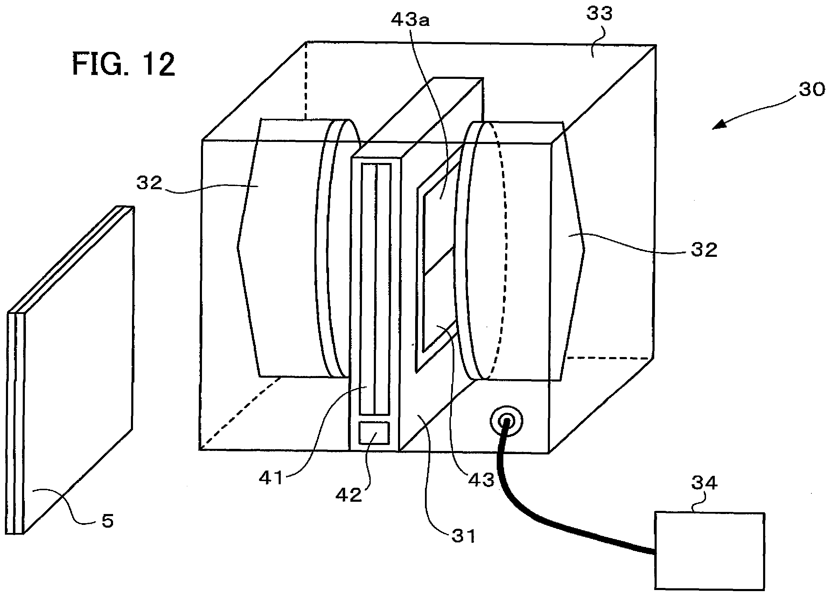

Furthermore, it is possible to employ a scintillation detector as explained below as a device for measuring the plastic scintillator 1 of the present invention. Fig. 12 is a schematic figure showing a scintillation detector according to an embodiment of the present invention. This scintillation detector 30 comprises a sample body installation section 31 in which a sample body 5 that is to be a sample body for scintillation measurement is installed, a pair of photomultiplier tubes 32 that are mounted to face the sample body installation section 31 and that measure the sample body 5, and a shielding body 33 that shields the sample body installation section 31 and the pair of photomultiplier tubes 32. It should be understood that the sample body 5 may be a PS 1 upon whose measurement surface 1b a droplet of a sample 3 has been dropped, examples of such a sample body 5 being the single PS 1S shown in Fig. 7A or the double PS 1D shown in Fig. 8. Hereinafter, in this embodiment, the explanation will refer to a double PS 1D as the sample body 5.

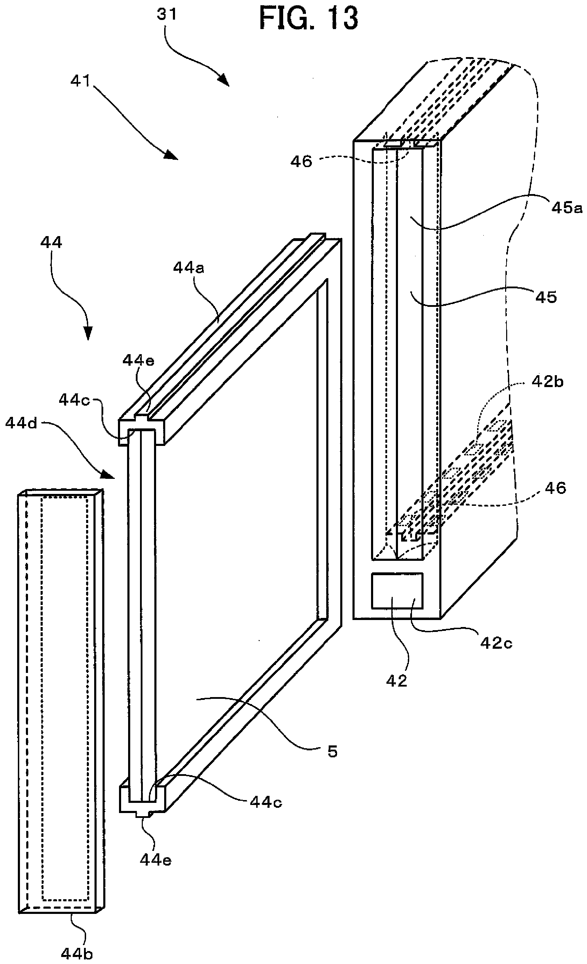

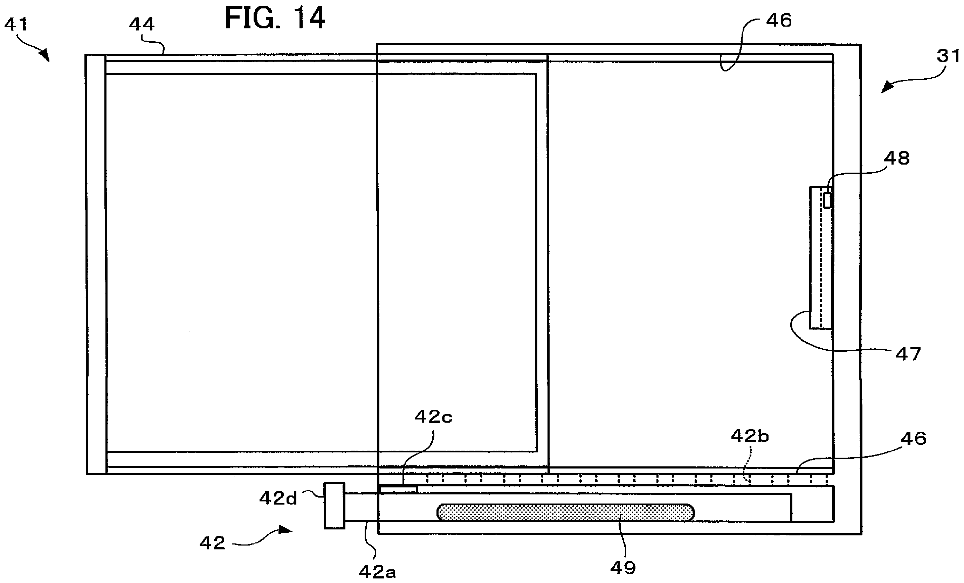

A sample body mounting portion 41, a drying agent attachment portion 42 that serves as a drying device, and an opening/closing portion 43 that serves as an opening/closing device are provided to the sample body installation section 31. The sample body 5 is installed into the sample body installation section 31 so that its measurement surface (or surfaces) 1b are parallel to the vertical direction. Fig. 13 is a perspective view showing principal portions of the sample body installation section 31, and Fig. 14 is a sectional view of the sample body installation section 31. An adapter 44 to which the sample body 5 is attached, an insertion slot 45 for the adapter 44 to be inserted into the sample body installation section 31 and fitted therein, guides 46 that guide the shifting of the adapter 44 so that it can slide, a holding portion 47 that serves as a holding device for holding in the adapter 44, and a detection sensor 48 that serves as a detection device for detecting that the adapter 44 has been fitted, are provided to the sample body mounting portion 41. A support member 44a that supports the edges of the sample body 5 and a fixing member 44b that fixes the sample body 5 held in the support member 44a are provided to the adapter 44. The support member 44a is formed as a square with one side missing, and grooves 44c are formed along their inner edges for guiding the sample body 5. The sample body 5 is inserted through an opening 44d of the support member 44a, and is guided by the grooves 44c thereof with its edges being supported. Moreover, projection portions 44e are provided on both the upper outer surface and the lower outer surface of the support member 44a, and these are guided by grooves 46a of the guides 46. The fixing member 44b fixes the sample body 5 after it has been loaded through the opening 44d of the support member 44a. This fixing member 44b is made from a material similar to that of the shielding body 33. The design of the adapter 44 may be changed as appropriate, according to the size of the sample body 5.

The insertion slot 45 is provided at an outer edge of the shielding body 33. Due to this, it is possible to fit the sample body 5 into the sample body installation section 31 via the insertion slot 45. Opening/closing doors 45a are provided to the insertion slot 45. These opening/closing doors 45a are double opening door flaps, each of which is biased by a spring or the like in the direction to close it. When the adapter 44 is inserted into the insertion slot 45, the opening/closing doors 45a are opened by being pressed in the inward direction; and, when the adapter 44 is taken out, the opening/closing doors 45a are closed by the above mentioned biasing force. The grooves 46a are provided on the guides 46 and mate with the projection portions 44e of the adapter 44 so as to guide it in and out. The holding portion 47 meshes with a receiving portion (not shown in the drawings) that is provided on the adapter 44, and thereby holds the adapter 44 in. When the adapter 44 is thus held in, the sample body 5 is positioned in an appropriate position for measurement of its radiation. For example, a per se known construction such as a push type latch mechanism or the like, which is locked and released repeatedly each time it is pushed, may be employed for this holding portion 47. And the detection sensor 48 detects contact of the adapter 44 with the holding portion 47. This detection sensor 48 may be a sensor of any of various per se known types, such as a contact sensor or a photoelectric sensor or the like. The detection sensor 48 may also not be provided upon the holding portion 47; for example, a structure may be provided in which the detection sensor 48 detects pushing in of the adapter 44 to some appropriate position.

The drying agent attachment portion 42 is provided below the sample body mounting portion 41, and is provided with a case 42a for putting in and taking out drying agent 49. For example, a hygroscopic agent such as silica gel or zeolite or the like may be used as this drying agent 49. Moreover, vent holes 42b are provided in a partition between the drying agent attachment portion 42 and the sample body mounting portion 41. Due to this, the internal space within the sample body installation section 31 in which the sample body 5 is installed is dried, and accordingly drying of the sample body 5 is promoted. Moreover, an opening/closing door 42c that is biased in the closing direction by a spring or the like is provided to the drying agent attachment portion 42. The opening/closing door 42c and the operating surface 42d of the case 42a may be made from a similar material to the shielding body 33. And opening/closing doors 43a having an opening/closing drive mechanism (not shown in the figures) are provided to the opening/closing portion 43. These opening/closing doors 43a are provided so as to face the photomultiplier tubes 32, and are controlled to be opened when radiation is being measured, while being closed when measurement is not being performed. A per se known type of shutter mechanism may be used for the opening/closing portion 43.

Per se known photomultiplier tubes that measure radiation may be used as the photomultiplier tubes 32. For example, compact photomultiplier tubes of 1/2 inch diameter that are utilized in survey meters used for beta-ray measurement may be employed as the photomultiplier tubes 32 of this embodiment. The photomultiplier tubes 32 are installed so as to face one another, and employ a coincidence counting method. Moreover, it is possible to maintain the photomultiplier tubes 32 in the shielded state, since the opening/closing doors 45a and 43a of the sample body installation section 31 are always biased. In order to eliminate the influence of natural radiation upon the photomultiplier tubes 32, the shielding body 33 is made from a metal, for example from lead. Or, as the shielding body 33, it would also be possible to surround the device from the outside with a wall in which layers of lead, iron, acrylic, and so on are superimposed in order. By doing this, it is possible to eliminate the influence of radiation contained in the lead by use of the iron and the acrylic, while still protecting the device from natural radiation from the exterior by use of the lead. The above are only examples; the material used for the shielding body 33, and the structure of the shielding wall, may be varied as appropriate. Furthermore, while in the above explanation the fixing member 44b of the adapter 44, the opening/closing door 42c, and the operating surface 42d of the case 42a have been described as being made from a similar material to that of the shielding body 33, they may be made from materials that are different from one another.

Due to the fact that the structure for covering the sample body installation section 31 and the photomultiplier tubes 32 with the shielding body 33 is simple, and due to the fact that the data processing is performed by a PC 34, it becomes possible to make this scintillation detector 30 more compact. Moreover, since the insertion slot 45 of the sample body installation section 31 is provided in the shielding body 33, accordingly it is possible to install the sample body 5 into the scintillation detector 30 simply and easily. And, since the sample body installation section 31 is built so as to isolate the sample body 5, which is the subject of measurement, within the interior of the scintillation detector 30, accordingly no influence from the sample body 5 can be exerted upon other parts of the structure due to carelessness with the sample. It should be understood that it is desirable for the weight of the scintillation detector 30 to be 9 kg or less, and for its dimensions to be one meter or less. The type of the photomultiplier tubes 32 used for the scintillation detector 30, and the structure of its shielding body 33, may be determined in consideration of the desirability of making it compact.

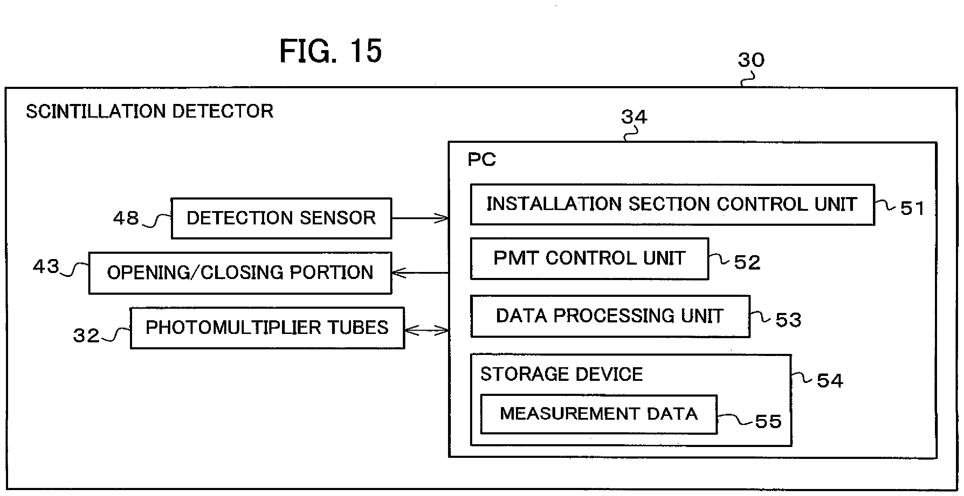

The scintillation detector 30 is connected to a personal computer 34 (hereinafter abbreviated as a "PC"). A per se known type of computer device may be used for the PC 34. Fig. 15 is a functional block diagram showing the structure of the control system of the scintillation detector 30. By executing programs for controlling the operation of the sample body installation section 31 and the photomultiplier tubes 32, the PC 34 provides, as logical devices that are implemented by a combination of computer hardware of the PC 34 (including a CPU and memory that serves as an internal storage device required for the operation of the CPU) and software, an installation section control unit 51, a PMT control unit 52, and a data processing unit 53. The installation section control unit 51 controls the opening and closing operation of the opening/closing portion 43 on the basis of the result of detection by the detection sensor 48 of the sample body installation section 31. The PMT control unit 52 controls the operation of the photomultiplier tubes 32. And the data processing unit 53 processes data obtained from the photomultiplier tubes 32. A storage device 54 is provided to the PC 34, and stores measurement data 55 processed by the data processing unit 53. This storage device 54 is an external storage device that is implemented by a storage unit such as a hard disk array or the like.

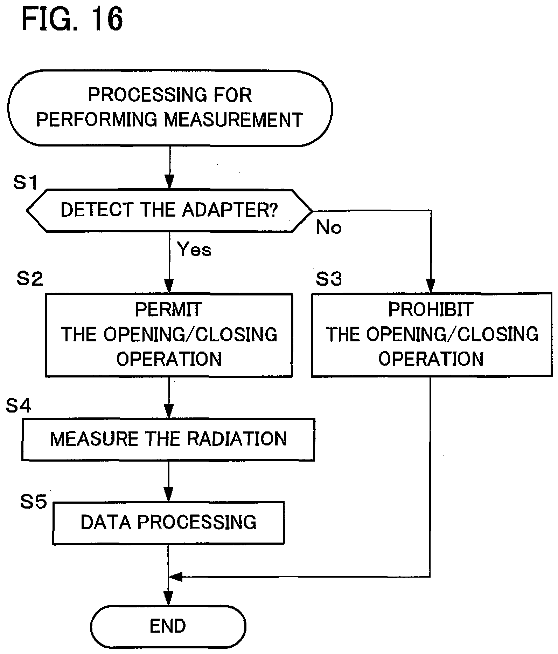

Fig. 16 is a flow chart showing processing for performing measurement, executed by the control units 51 and 52, and the data processing unit 53 of the PC 34. The operation of the scintillation detector 30 will now be explained by following the flow chart of Fig. 16. First the installation section control unit 51 determines whether or not there is any detection signal from the detection sensor 48 (a step S1). When the adapter 44 with a sample body 5 attached in it is inserted into the insertion slot 45 of the sample body installation section 31, then the receiving portion of the adapter 44 is engaged by the holding portion 47, so that the adapter 44 is fixed. When the adapter 44 is thus fixed by the holding portion 47, a detection signal is transmitted to the installation section control unit 51 by the detection sensor 48. When this detection signal is received, the installation section control unit 51 controls the operation of the opening/closing drive mechanism so as to open the opening/closing doors 43a of the opening/closing section 43 (a step S2). On the other hand, if no such detection signal is received, then the installation section control unit 51 prohibits the opening/closing operation of the opening/closing section 43 (a step S3), and then the flow of control returns to the step S1.

When the opening/closing doors 43a are opened in the step S2, then, according to operation of the PC 34 by the person performing the measurement, the PMT control unit 52 operates the photomultiplier tubes 32, and measures the radiation (a step S4). After measurement of the radiation, the data processing unit 53 generates measurement data 55 on the basis of the results of measurement that have been obtained (a step S5), and then terminates this episode of processing. In the processing in the steps S4 and S5 per se known techniques may be utilized, and accordingly detailed explanation thereof will be omitted. When the adapter 44 is removed from the sample body installation section 31, the shielded state is maintained, since the opening/closing doors 45a of the insertion slot 45 close. It should be understood that the processing of the steps S1 through S3 serves as the operation control device.

In the embodiment described above, a situation was explained in which the sample body installation section 31 was fixed to the shielding body 33, but this is not to be considered as being limitative. For example, it would also be acceptable to arrange for the sample body installation section 31 to be detachable from the shielding body 33. In this case, it would be possible to arrange to maintain the shielded state by providing the opening/closing doors 45a, which were provided to the sample body installation section 31, to the shielding body 33 instead. Moreover, in the embodiment described above, the two photomultiplier tubes 32 were provided so as to oppose one another on opposite sides of the sample body installation section 31, but this is not to be considered as being limitative. It would also be possible to arrange to provide a single photomultiplier tube 32 on one side only of the sample body installation section 31, or to arrange to provide a combination of a plurality of photomultiplier tubes of different diameters. Furthermore, the scintillation detector 30 described above could include a high voltage power supply or a high voltage generating device.

Yet further, in the embodiment described above, the subject of measurement by the scintillation detector 30 was explained as being a double PS 1D, but this is not to be considered as being limitative. It would also be acceptable for the subject of measurement to be a single PS 1S. Yet further, it would be possible to measure PSs 1 of various sizes. An adapter 44 corresponding appropriately to the PS 1 that is to be the subject of measurement may be employed. Moreover, it would be acceptable for no adapter 44 to be employed. Thus, it would be acceptable to arrange for a supporting body that can be put into and taken out of the insertion slot 45 to be provided, and for the sample body 5 to be directly attached to this supporting body. It may be arranged for this supporting body to support the sample body 5 by its edge portion. Furthermore, it would also be possible to form the supporting body from a material that exerts no influence upon the measurements, such as a material of similar quality to the glass used in the glass vial 21 or the plastic scintillator or the like, and to make it into a tray shape.

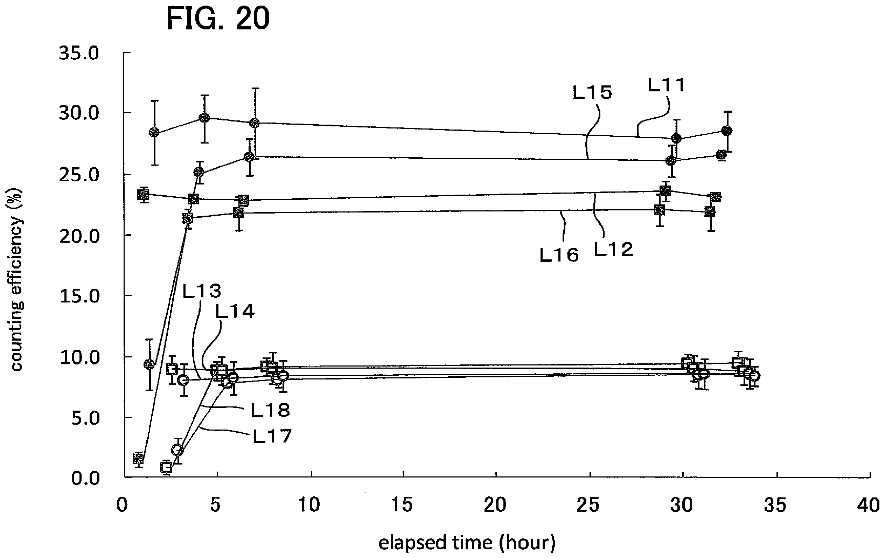

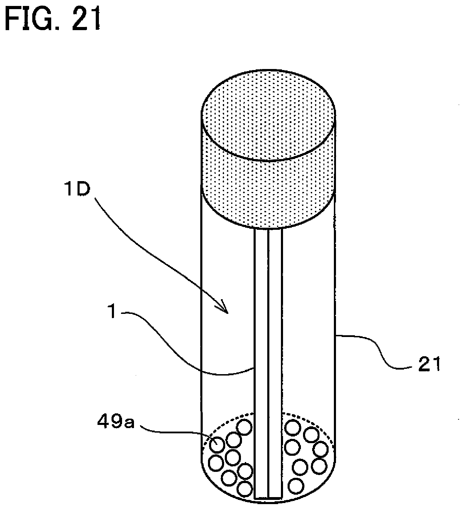

In the embodiment described above, a drying agent was used in the scintillation detector 30. In the following, the beneficial effects of this drying agent will be explained. Fig. 20 consists of graphs showing the counting efficiencies of plastic scintillators compared, with drying agent both present and absent. The graphs of Fig. 20 are results when a droplet of a sample 3 was allowed to fall upon a PS1 which was then set into a glass vial 21, the vial was installed in a liquid scintillation detector 20, and the radiation was measured. Fifteen granular beads of silica gel 49a (made by Wako Pure Chemical Industries Co. Ltd, "silica gel", large granule type (white color)) were put into the bottom portion of the glass vial 21, and served as a drying agent. Fig. 21 is a perspective view of the glass vial 21 with the silica gel beads 49a installed.

In the graph of Fig. 20, the results of measurement with a glass vial 21 in which silica gel beads 49a were installed for a double PS 1D that had been plasma treated are shown by the line L11, the results of measurement with a glass vial 21 in which silica gel beads 49a were installed for a single PS 1S that had been plasma treated are shown by the line L12, the results of measurement with a glass vial 21 in which silica gel beads 49a were installed for a double unprocessed PS 2D upon which plasma treatment had not been performed are shown by the line L13, and the results of measurement with a glass vial 21 in which silica gel beads 49a were installed for a single unprocessed PS 2 upon which plasma treatment had not been performed are shown by the line L14. The horizontal axis in Fig. 20 is elapsed time (in hours), and the vertical axis is counting efficiency (in percent). Moreover, in the graph of Fig. 20, as comparison examples, the results of measurement with a glass vial 21 in which no such silica gel beads 49a were installed are shown by lines L15 through L18. The line L15 shows the results of measurement for a double PS 1D that had been plasma treated, the line L16 shows the results of measurement for a single PS 1S that had been plasma treated, the line L17 shows the results of measurement for a double unprocessed PS 1D upon which plasma treatment had not been performed, and the line L19 shows the results of measurement for a single unprocessed PS 2 upon which plasma treatment had not been performed. DBD plasma treatment employing argon gas was performed for one minute upon the plastic scintillators used in these measurements. Moreover, as the sample 3, droplets of tritiated water of 33 Bq - 5 µL of the same size were let fall. Starting one hour after the droplets were let fall, a plurality of measurements was made at intervals for each of the plastic scintillators within two minutes for one measurement until 34 hours had elapsed.

From these measurement results it will be understood that while, for the plastic scintillators for which no silica gel beads 49 were installed, around six hours was required until a stable counting efficiency was obtained, for the plastic scintillators for which silica gel beads 49a were installed, directly after measurement started, a stable counting efficiency was obtained after one hour, in the case of the double PS 1D (the line L11) and of the single PS 1S (the line L12) that had been plasma treated, with the glass vial 21 in which silica gel beads 49a were installed. Moreover, when the presence or absence of the silica gel beads 49a are compared together, the results with the silica gel beads 49a installed are obtained at higher efficiency, although the effect is slight. Since with the experiment of Fig. 20, in the interests of experimental convenience, measurement was started after one to two hours, accordingly, although a counting efficiency that became constant was only obtained from the results after one to two hours, actually it may be supposed that a sufficiently stabilized counting efficiency was obtained even within one hour. It should be understood that the measurement of one sample in the experiment of Fig. 20 had a sufficient sensitivity during a period of two minutes. Moreover, even if the drying agent 49 was installed in the scintillation detector 30, the time period after the start of measurement that was required until a constant counting efficiency was obtained could be from a few minutes until a few tens of minutes, and it can be inferred that this is greatly shortened as compared to the prior art.

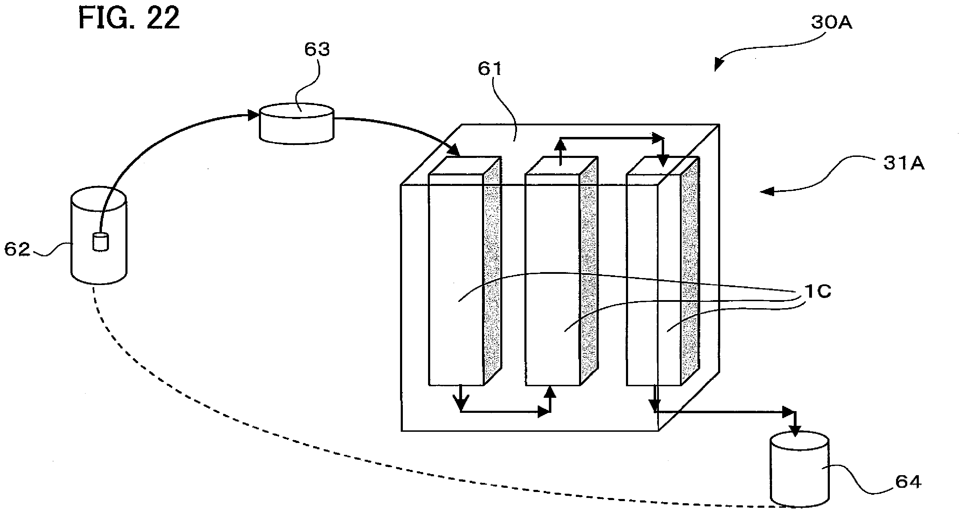

The scintillation detector 30 is described above. For example it would be acceptable to arrange for the sample body installation section 31 to have a structure of a sample circulation type. Fig. 22 is a conceptual figure showing principal portions of a scintillation detector 30A according to such a variant embodiment, and particularly shows the sample body installation section 31A of this scintillation detector 30A. It should be understood that, in this scintillation detector 30A, the other parts apart from the sample body installation section 31A may be similar in structure to the scintillation detector 30 described above. To this sample body installation section 31A, there are provided: an installation portion 61 in which at least one plastic scintillator 1C can be installed (in Fig. 22, three PSs 1C are shown); a sample container 62 into which a sample 3 is put; a pump 63 that pumps the sample 3 in the sample container 62 to the installation portion 61; and a waste liquid container 64 that stores samples that have been discharged from the installation portion 61. At least one PS 1C is installed in the installation portion 61, and the sample 3 forwarded by the pump 63 is supplied to the PS 1C. Fine grooves are provided in the measurement surface of the PS 1C, and the sample 3 is supplied to these fine grooves. If a plurality of PSs 1C are installed in the installation portion 61, then these PSs 1C are linked together, and the sample 3 flows from each PS 1C to the next. Instead of the sample 3 flowing to the waste liquid container 64, it would also be acceptable to provide a structure in which it is returned to the sample container 62. For the structure of a sample body installation section 31A of this sample circulation type, per se known art may be employed. Moreover, it would also be possible to arrange for the PSs 1C that are used to be shaped as cylinders.

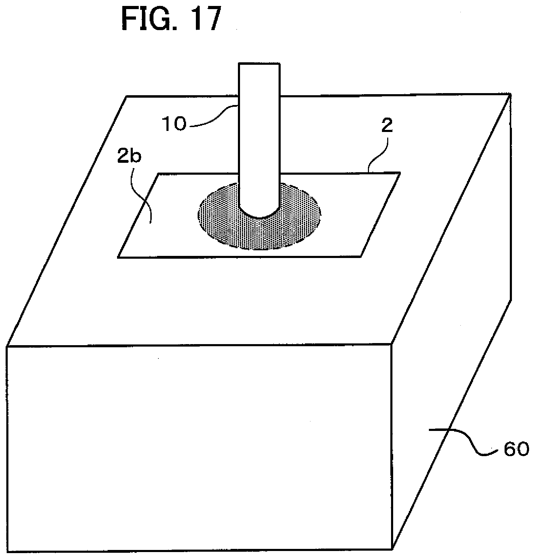

Still further, during the first process described above, when irradiating the plasma against the measurement surface 2b of the unprocessed PS 2, it would be possible to shake the unprocessed PS 2 to and fro in a direction parallel to its measurement surface 2b reciprocatingly at a constant speed. In this case, the plasma irradiation device 10 will irradiate the plasma against the measurement surface 2b while it is being shaken to and fro. A shaking apparatus 60 is provided as an apparatus for shaking the unprocessed PS 2. Fig. 17 is a figure for explanation of this irradiation of plasma against the unprocessed PS 2 which is being shaken to and fro, during this first process. Any one of various per se known types of Thermostatic shaking water bath or various per se known types of shaking devices or the like may be used as the shaking apparatus 60. The shaking apparatus 60 shakes the unprocessed PS 2 to and fro reciprocatingly at a constant speed, while the plasma irradiation device 10 irradiates the plasma from a constant distance. Due to this, it is possible to widen the range upon the unprocessed PS 2 over which the plasma is irradiated, as compared to the case in which no such shaking apparatus 60 is provided.

## Claims

1. A plastic scintillator (PS1) containing fluorescent substance wherein the plastic scintillator (PS1) is configured to be used in a scintillation detector (30) which measures fluorescence emitted from the fluorescent substance due to radiation and comprises a measurement surface (1b) **characterised in that** said measurement surface has been reformed by irradiation with plasma in order to enhance hydrophilic properties thereof.

2. A plastic scintillator (PS1) according to Claim 1, wherein two plastic scintillators (PS1) are made into one set in order to sandwich a liquid sample (3) that is to be a subject for measurement by the scintillation detector between their respective measurement surfaces.

3. A method for manufacturing a sample body (5) for scintillation measurement for use in a scintillation detector (30) in which a liquid sample (3) that includes a radioactive substance is taken as a subject for measurement and which measures fluorescence emitted from fluorescent substance due to radiation, the sample body (5) being configured to include at least one plastic scintillator (PS1) as claimed in Claim 1, wherein the method for manufacturing the sample body (5) comprises the steps of:
forming a liquid film of the liquid sample (3) that is to be the subject for measurement over the treated measurement surface (1b).

4. A method for manufacturing a sample body (5) for scintillation measurement according to Claim 3, further comprising, in the film forming step, superimposing two plastic scintillators having treated measurement surfaces (1b) respectively, so that the liquid sample (3) that is to be the subject of measurement is sandwiched between their respective measurement surfaces (1b).

5. A method for manufacturing a sample body for scintillation measurement according to Claim 3 or Claim 4, wherein the subject for measurement (3) is tritiated water.

6. A scintillation detector (30), comprising:
a sample body installation section (31) in which is installed a sample body (5) for scintillation measurement that has been manufactured by allowing a droplet of a liquid sample to fall upon a measurement surface of the plastic scintillator (PS1) of Claim 1;
a photomultiplier tube (32) configured to measure the sample body (5) for scintillation measurement installed in the sample body installation section (31); and
a shielding body (33) configured to shield the sample body installation section (31) and the photomultiplier tube (32);
wherein an insertion slot (45) for inserting and mounting the sample body for scintillation measurement is provided in the sample body installation section (31).

7. A scintillation detector (30) according to Claim 6, wherein an adapter (44) that can be attached to the sample body (5) for scintillation measurement is provided to the sample body installation section (31), the adapter (44) being mounted in the sample body installation section (31) via the insertion slot (45).

8. A scintillation detector according to Claim 7, wherein:
a holding device (47) configured to hold the adapter (44), a detection device (48) configured to detect that the adapter (44) has been held by the holding device (47), and an opening/closing device (43) configured to be positioned between the sample body (5) for scintillation measurement installed in the sample body installation section (31) and the photomultiplier tube (32) are provided to the sample body installation section (31); and further comprising
an operation control device (51) configured to control the opening/closing operation of the opening/closing device (43) on the basis of the result of detection by the detection device (48).

9. A scintillation detector (30) according to any one of Claims 6 through 8, wherein a drying device (42) is provided to the sample body installation section (31) for drying an internal space thereof in which the sample body (5) for scintillation measurement is installed.

## Patentansprüche

1. Kunststoffszintillator (PS1), der eine fluoreszierende Substanz enthält, wobei der Kunststoffszintillator (PS1) konfiguriert ist, um in einer Szintillationserfassungseinrichtung (30), die eine Fluoreszenz misst, die von der fluoreszierenden Substanz aufgrund von Strahlung emittiert wird, verwendet zu werden und eine Messoberfläche (1b) umfasst, die **dadurch gekennzeichnet ist, dass** die Messoberfläche durch Bestrahlung mit einem Plasma neugebildet wurde, um deren hydrophile Eigenschaften zu steigern.

2. Kunststoffszintillator (PS1) nach Anspruch 1, wobei zwei Kunststoffszintillatoren (PS1) zu einem Aggregat zusammengefasst werden, um eine flüssige Probe (3) zwischen sich einzuschließen, welche Gegenstand der Messung durch die Szintillationserfassungseinrichtung zwischen ihren jeweiligen Messflächen sein soll.

3. Verfahren zur Herstellung eines Probenkörpers (5) zur Szintillationsmessung zur Verwendung in einer Szintillationserfassungseinrichtung (30), in dem eine flüssige Probe (3), die eine radioaktive Substanz beinhaltet, als Gegenstand einer Messung dient und die eine Fluoreszenz misst, die von der fluoreszierenden Substanz aufgrund von Strahlung emittiert wird, wobei der Probenkörper (5) konfiguriert ist, um wenigstens einen Kunststoffszintillator (PS1) nach Anspruch 1 zu beinhalten, wobei das Verfahren zur Herstellung des Probenkörpers (5) die folgenden Schritte umfasst:
das Ausbilden eines Flüssigkeitsfilms der flüssigen Probe (3), die Gegenstand der Messung sein soll, über der behandelten Messoberfläche (1b).

4. Verfahren zur Herstellung eines Probenkörpers (5) für eine Szintillationsmessung nach Anspruch 3 ferner umfassend, in dem Schritt der Filmbildung, eine Überlagerung zweier Kunststoffszintillatoren, die jeweils behandelte Messoberflächen (1b) aufweisen, sodass die flüssige Probe (3), die Gegenstand der Messung werden soll, zwischen deren jeweiligen Messoberflächen (1b) eingeschlossen ist.

5. Verfahren zur Herstellung eines Probenkörpers für eine Szintillationsmessung nach einem der Ansprüche 3 oder 4, wobei der Gegenstand der Messung (3) überschweres Wasser ist.

6. Szintillationserfassungseinrichtung (30), umfassend:
einen Einbringungsbereich (31) eines Probenkörpers, in dem ein Probenkörper (5) zur Szintillationsmessung eingebracht ist, der hergestellt wurde, indem einem Tropfen einer flüssigen Probe erlaubt wurde, auf eine Messoberfläche des Kunststoffszintillators (PS1) nach Anspruch 1 zu fallen;
eine Photovervielfacherröhre (32), die konfiguriert ist, um den Probenkörper (5) zur Szintillationsmessung, der in dem Einbringungsbereich (31) des Probenkörpers eingebracht ist, zu messen; und
einen Abschirmkörper (33), der konfiguriert ist, um den Einbringungsbereich (31) des Probenkörpers und die Photovervielfacherröhre (32) abzuschirmen;
wobei ein Einführungsschlitz (45) zum Einführen und Anbringen des Probenkörpers zur Szintillationsmessung im Einbringungsbereich (31) des Probenkörpers bereitgestellt wird.

7. Szintillationserfassungseinrichtung (30) nach Anspruch 6, wobei ein Adapter (44), der am Probenkörper (5) zur Szintillationsmessung angebracht werden kann, dem Einbringungsbereich (31) des Probenkörpers bereitgestellt wird, wobei der Adapter (44) im Einbringungsbereich (31) des Probenkörpers über den Einführungsschlitz (45) angebracht wird.

8. Szintillationserfassungseinrichtung nach Anspruch 7, wobei:
eine Haltevorrichtung (47), die konfiguriert ist, um den Adapter (44) zu halten, eine Erfassungsvorrichtung (48), die konfiguriert ist, um zu erfassen, dass der Adapter (44) von der Haltevorrichtung (47) gehalten wurde, und eine Öffnungs-/Schließvorrichtung (43), die konfiguriert ist, um zwischen dem Probenkörper (5) zur Szintillationsmessung, der im Einbringungsbereich (31) des Probenkörpers eingebracht ist, und der Photovervielfacherröhre (32) positioniert zu werden, dem Einbringungsbereich (31) des Probenkörpers bereitgestellt werden; und ferner umfassend eine Operationssteuerungsvorrichtung (51), die konfiguriert ist, um die Öffungs-/Schließbewegung der Öffnungs-/Schließvorrichtung (43) basierend auf dem Ergebnis der Erfassung durch die Erfassungsvorrichtung(48) zu steuern.

9. Szintillationserfassungseinrichtung (30) nach einem der Ansprüche 6 bis 8, wobei eine Trocknungsvorrichtung (42) dem Einbringungsbereich (31) des Probenkörpers bereitgestellt wird, um einen Innenraum davon zu trocknen, in dem der Probenkörper (5) zur Szintillationsmessung eingebracht ist.

## Revendications

1. Scintillateur plastique (PS1) contenant une substance fluorescente dans laquelle le scintillateur plastique (PS1) est configuré pour être utilisé dans un détecteur de scintillation (30) qui mesure une fluorescence émise depuis la substance fluorescente du fait d'une radiation et comprend une surface de mesure (1b) **caractérisé en ce que** ladite surface de mesure a été reformée par irradiation au plasma afin d'améliorer les propriétés hydrophiles de celle-ci.

2. Scintillateur plastique (PS1) selon la revendication 1, dans lequel deux scintillateurs plastique (PS1) sont conçus dans un même ensemble afin de prendre en sandwich un échantillon liquide (3) qui doit être un sujet de mesure par le détecteur de scintillation entre leurs surfaces de mesure respectives.

3. Procédé de fabrication d'un corps échantillon (5) pour une mesure de scintillation à utiliser dans un détecteur de scintillation (30) dans lequel un échantillon liquide (3) qui inclut une substance radioactive est prélevé en tant que sujet de mesure et qui mesure une fluorescence émise depuis une substance fluorescente du fait d'une radiation, le corps échantillon (5) étant configuré pour inclure au moins un scintillateur plastique (PS1) selon la revendication 1, dans lequel le procédé de fabrication du corps échantillon (5) comprend les étapes de :
formation d'un film liquide de l'échantillon liquide (3) qui est le sujet de mesure sur la surface de mesure traitée (1b).

4. Procédé de fabrication d'un corps d'échantillon (5) pour une mesure de scintillation selon la revendication 3, comprenant en outre, dans l'étape de formation d'un film, la superposition de deux scintillateurs plastique ayant des surfaces de mesure traitées (1b) respectivement, de façon à ce que l'échantillon liquide (3) qui est le sujet de mesure soit pris en sandwich entre leurs surfaces de mesure respectives (1b).

5. Procédé de fabrication d'un corps d'échantillon pour une mesure de scintillation selon la revendication 3 ou 4, dans lequel le sujet de mesure (3) est de l'eau tritiée.

6. Détecteur de scintillation (30), comprenant:
une section d'installation du corps échantillon (31) dans laquelle est installé un corps échantillon (5) pour une mesure de scintillation qui a été fabriqué en permettant à une goutte d'un échantillon liquide de tomber sur une surface de mesure du scintillateur plastique (PS 1) selon la revendication 1 ;
un tube photomultiplicateur (32) configuré pour mesurer le corps échantillon (5) pour une mesure de scintillation installé dans la section d'installation du corps échantillon (31) ; et
un corps de protection (33) configuré pour protéger la section d'installation du corps échantillon (31) et le tube photomultiplicateur (32) ;
dans lequel une fente d'insertion (45) destinée à insérer et monter le corps échantillon pour une mesure de scintillation est prévue dans la section d'installation du corps échantillon (31).

7. Détecteur de scintillation (30) selon la revendication 6, dans lequel un adaptateur (44) qui peut être attaché au corps échantillon (5) pour une mesure de scintillation est pourvu à la section d'installation du corps échantillon (31), l'adaptateur (44) étant monté dans la section d'installation du corps échantillon (31) via la fente d'insertion (45).

8. Détecteur de scintillation selon la revendication 7, dans lequel :
un dispositif de support (47) configuré pour supporter l'adaptateur (44), un dispositif de détection (48) configuré pour détecter que l'adaptateur (44) est supporté par le dispositif de support (47), et un dispositif d'ouverture/fermeture (43) configuré pour être positionné entre le corps échantillon (5) pour une mesure de scintillation installé dans la section d'installation du corps échantillon (31) et le tube photomultiplicateur (32) sont pourvus à la section d'installation du corps échantillon (31); et comprenant en outre un dispositif de commande d'opération (51) configuré pour commander l'opération d'ouverture/fermeture du dispositif d'ouverture/fermeture (43) sur la base du résultat de détection par le dispositif de détection (48).

9. Détecteur de scintillation (30) selon l'une quelconque des revendications 6 à 8, dans lequel un dispositif de séchage (42) est pourvu à la section d'installation du corps échantillon (31) pour sécher un espace interne de celle-ci dans lequel le corps échantillon (5) pour une mesure de scintillation est installé.
